# FASCICULE DE BREVET EUROPEEN

(11) **EP 3 170 297 B1**
(45) Date de publication et mention de la délivrance du brevet: **11.07.2018**
(21) Numéro de dépôt: 15734596.8
(22) Date de dépôt: 23.06.2015
(51) Int. Cl.: H04L 29/08, G06F 17/16, G06Q 20/34, G06Q 30/02, E06B 11/08, E06B 3/70, G07F 17/16

(54) **SYSTÈME ET PROCÉDÉ DE CONTRÔLE D'ACCÈS À UN SERVICE OU À UN LIEU**
SYSTEM UND VERFAHREN ZUM DIENST- ODER ORTSZUGANGSKONTROLLE
SERVICE OR LOCATION ACCESS CONTROL SYSTEM AND METHOD

(30) Priorité: 18.07.2014 FR 1401630
(43) Date de publication de la demande: 24.05.2017
(73) Titulaire: Revenue Collection Systems France SAS, 91220 Plessis-Pâté (FR)
(72) Inventeur: WARNITZ, Philippe, F-91229 Bretigny-sur-Orge Cedex (FR)
(74) Mandataire: Lavoix
(86) Numéro de dépôt international: PCT/EP2015/064160
(87) Numéro de publication internationale: WO 2016/008686

(56) Documents cités:
- EP-A1- 2 515 270
- WO-A1-99/16701
- WO-A2-2013/173581
- US-A1- 2002 186 133
- US-A1- 2004 056 087
- US-A1- 2008 248 815
- US-A1- 2014 019 177

## Description

La présente invention concerne un système et un procédé de contrôle d'accès à un service et/ou à un lieu, du type comprenant des dispositifs de gestion d'accès permettant de délivrer à un utilisateur une autorisation d'accès, ou d'autoriser ou valider l'accès par un utilisateur à ce service et/ou à ce lieu. Elle trouve notamment une application au contrôle de l'accès à un réseau de transport, tel qu'un réseau de transport souterrain ou métro, comprenant des dispositifs de gestion d'accès tels que de portillons d'accès, des dispositifs de vente et/ou de validation de titres matériels ou virtuels de transport.

Dans le cadre d'un service tel qu'un réseau de transport, comme un réseau de métro par exemple, il est souhaitable de pouvoir diffuser des informations telles que des annonces publicitaires ou des annonces de service.

Ces informations, notamment les annonces de service, sont par exemple diffusées par l'intermédiaire de supports d'annonce autocollants.

Mais leur mise en place est compliquée et nécessite souvent une interruption du trafic ou des opérations, en particulier quand les annonces sont diffusées au niveau d'un dispositif de gestion de l'accès tel qu'un portillon d'accès.

Par ailleurs, les supports autocollants ont tendance à se décoller dans le temps, et doivent être remplacés, ce qui multiplie les interventions.

Egalement, ils laissent des traces difficiles à enlever lors du retrait de l'annonce ce qui augmente en général les perturbations, et ils doivent être prévus pour une diffusion sur une durée relativement longue, ce qui ne correspond pas toujours au type d'information que l'on veut diffuser.

En outre, il n'est pas possible de gérer la diffusion des informations, notamment celles de type annonce publicitaire, comme dans un système classique dédié à la gestion de la diffusion de telles informations, c'est-à-dire que l'on ne peut pas gérer la réservation d'espace d'annonce (lieu et temps), que l'on ne peut pas suivre la diffusion des annonces dans les espaces prévus, et que l'on ne peut pas gérer la facturation de la diffusion des annonces.

Le document US 2004/0056087 A décrit un système et un procédé visant à afficher des données en utilisant des informations mémorisées sur un support intelligent.

Un des buts de l'invention est donc de résoudre les problèmes précités. Ainsi, l'invention a notamment pour objectif de proposer un système et un procédé informatisé de contrôle d'accès permettant de positionner et retirer rapidement, et avec un minimum de perturbation opérationnelle, des informations telles que des annonces publicitaires ou des annonces de service, en utilisant les ressources de contrôle d'accès tels que les dispositifs de gestion d'accès du système de contrôle d'accès (portillons d'accès, dispositifs de vente et/ou de validation de titres matériels ou virtuels de transport dans un réseau de transport,...), et permettent également la gestion de la diffusion des informations, notamment le suivi et la facturation de la diffusion de ces informations, par le système de contrôle d'accès lui-même. L'invention est définie par la revendication de système 1 et par la revendication de procédé 5. Ainsi, l'invention a pour objet, selon un premier aspect, un système informatisé de contrôle d'accès à un service et/ou à un lieu, comprenant plusieurs dispositifs de gestion d'accès aptes à délivrer une autorisation d'accès, ou à autoriser ou valider l'accès, audit service et/ou lieu par un utilisateur, chacun des dispositifs de gestion d'accès étant identifié par un identifiant de dispositif, le système comprenant également une base de données dans laquelle sont stockés les identifiants de dispositif, et des moyens de contrôle des dispositifs de gestion d'accès aptes à contrôler le fonctionnement des dispositifs de gestion d'accès,

La base de données comprend des informations à diffuser identifiées chacune par un identifiant d'information également stocké dans la base de données, au moins un dispositif déterminé parmi les dispositifs de gestion d'accès est associé à au moins un moyen de diffusion d'information, et les moyens de contrôle sont aptes à associer dans la base de données l'identifiant d'au moins une information déterminée à diffuser à l'identifiant du dispositif déterminé, en sorte de permettre la gestion de la diffusion, par le moyen de diffusion associé au dispositif déterminé, de l'information déterminée.

Suivant certains modes de réalisation, le système comprend en outre une ou plusieurs des caractéristiques suivantes, prise(s) isolément ou suivant toutes les combinaisons techniquement possibles :
- l'un des dispositifs de gestion d'accès et/ou un module d'autorisation accessible à distance via un réseau informatique, sont aptes à délivrer des autorisations d'accès au service et/ou lieu sur un support tel qu'un ticket ou une carte de type magnétique ou sans contact, et ledit dispositif de gestion d'accès et/ou ledit module d'autorisation sont aptes à délivrer un marqueur associé à l'identifiant de l'information déterminée sur un support tel qu'un ticket ou une carte de type magnétique ou sans contact ;
- le dispositif déterminé comprend un lecteur de support d'autorisation d'accès relié aux moyens de contrôle, et le lecteur est apte à lire le support de marqueur en sorte de permettre la gestion de la diffusion de l'information ;
- le moyen de diffusion est apte à recevoir de façon temporaire le support de marqueur associé à l'identifiant de l'information déterminée ;
- le moyen de diffusion comprend un support d'information physique ;
- le moyen de diffusion comprend au moins une glissière fixée sur le, ou à proximité du, dispositif déterminé, et le support d'information physique est placé sur ou dans un panneau inséré dans la glissière ;
- le moyen de diffusion comprend un moyen de diffusion électronique de l'information déterminée, sous la forme d'une information sonore et/ou visuelle, disposé sur le, ou à proximité du, dispositif déterminé, et les moyens de contrôle sont aptes contrôler directement la diffusion électronique de l'information déterminée par le moyen de diffusion ;
- le dispositif déterminé est une porte d'accès ou un distributeur automatique d'autorisations d'accès ou un guichet de vente d'autorisations d'accès ou un dispositif de lecture et/ou validation d'autorisations d'accès, notamment pour l'accès à un réseau de transport.

L'invention concerne également, selon un deuxième aspect, un procédé informatisé de contrôle d'accès à un service et/ou à un lieu, par la délivrance d'une autorisation d'accès, ou par autorisation ou validation de l'accès, audit service et/ou lieu par un utilisateur, par l'intermédiaire de plusieurs dispositifs de gestion d'accès chacun identifié par un identifiant de dispositif stocké dans une base de données et chacun contrôlé par des moyens de contrôle.

La base de données comprend des informations à diffuser identifiées chacune par un identifiant d'information également stocké dans la base de données, au moins un dispositif déterminé parmi les dispositifs de gestion d'accès est associé à au moins un moyen de diffusion d'information, et le procédé comprend l'association et/ou la dé-association, dans la base de données, par les moyens de contrôle, de l'identifiant d'au moins une information déterminée à diffuser avec l'identifiant du dispositif déterminé, en sorte de permettre la gestion de la diffusion, par le moyen de diffusion associé au dispositif déterminé, de l'information déterminée.

Suivant certains modes de mise en oeuvre, le procédé comprend en outre une ou plusieurs des caractéristiques suivantes, prise(s) isolément ou suivant toutes les combinaisons techniquement possibles :
- des autorisation d'accès au service et/ou lieu sont délivrées par l'un des dispositifs de gestion d'accès et/ou un module d'autorisation accessible à distance via un réseau informatique, sur un support tel qu'un ticket ou une carte de type magnétique ou sans contact, et un marqueur associé à l'identifiant de l'information déterminée est délivré par ledit dispositif de gestion d'accès et/ou ledit module d'autorisation, sur un support tel qu'un ticket ou une carte de type magnétique ou sans contact ;
- le dispositif déterminé comprend un lecteur de support d'autorisation d'accès relié aux moyens de contrôle, et le procédé comprend la lecture par le lecteur du support de marqueur en sorte de permettre la gestion de la diffusion de l'information ;
- le procédé comprend le positionnement du support de marqueur de façon temporaire dans le moyen de diffusion ;
- le procédé comprend la diffusion de l'information déterminée sur un support d'information physique placé sur ou dans un panneau inséré dans au moins une glissière fixée sur le, ou à proximité du, dispositif déterminé ;
- le procédé comprend la diffusion électronique de l'information déterminée par le moyen de diffusion, sous la forme d'une information sonore et/ou visuelle, et le contrôle directe par les moyens de contrôle de la diffusion électronique de l'information déterminée par le moyen de diffusion.

Ainsi, le système et le procédé de l'invention permettent de positionner et retirer rapidement et sans ou avec un minimum de perturbation opérationnelle, des informations, telles que des annonces publicitaires ou des annonces de service, sur les dispositifs de gestion d'accès du système de contrôle d'accès tels que les portillons d'accès, les dispositifs de vente et/ou de validation de titres matériels ou virtuels de transport dans un réseau de transport. Ceci est particulièrement important pour réduire au minimum les interruptions de trafic dans un réseau de transport.

Le système et le procédé permettent également la gestion de la diffusion des informations, notamment le suivi et la facturation de la diffusion de ces informations, par le système de contrôle d'accès lui-même.

Cette gestion de la diffusion des informations, intégrée au système de contrôle d'accès, peut être réalisée par exemple par l'opérateur du système de contrôle d'accès, ou comme un service rendu par une société de maintenance des équipements et dispositifs du système.

Le système et le procédé de l'invention sont ainsi particulièrement adaptés à la diffusion d'informations de type annonce publicitaire, car le nombre de dispositifs de gestion d'accès dans un système de contrôle d'accès peut être important. En effet, un de transport tel qu'un réseau de métro peut facilement comprendre une centaine de stations avec en moyenne une quinzaine de dispositifs de gestion d'accès par station, donc au moins 1500 emplacements publicitaires.

En outre, les emplacements correspondants aux dispositifs de gestion d'accès dans un système de contrôle de l'accès à un réseau de transport, tels que les portillons d'accès ou les machines de vente, sont nécessairement des emplacements associés à un passage maximum d'utilisateurs, et les annonces peuvent facilement être ciblées en fonction des activités, tels que commerces ou événements, à proximité.

Egalement, les annonces publicitaires peuvent être facilement positionnées ou retirées en fonction de certaines caractéristiques d'annonce : annonce pour événements courts ou très courts (par exemple d'une semaine à une demi-journée) comme un évènement sportif, une promotion commerciale ; annonce pour évènement semi-permanent ou permanent comme la présence d'un centre commercial louant à l'année.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un exemple de système de contrôle d'accès selon l'invention ;
- figure 2 : représentation schématique d'un exemple de moyen de diffusion d'information associé à un dispositif de gestion d'accès dans le système de la figure 1 ;
- figures 3 à 5 : représentations schématiques d'un dispositif de gestion d'accès du système de la figure 1, associé à un moyen de diffusion d'information avec respectivement une information diffusée en cours de désinsertion, une information à diffuser en cours d'insertion, et une information insérée donc en cours de diffusion.

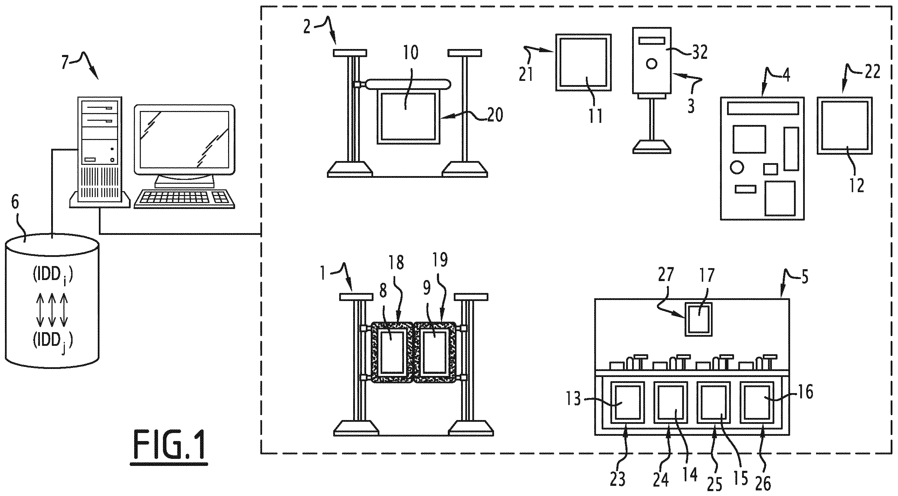

Un exemple de système de contrôle d'accès à un service et/ou à un lieu selon l'invention est représenté schématiquement à la figure 1. Il peut s'agir par exemple de l'accès à un réseau de transport tel qu'un réseau de métro.

Dans cet exemple, des moyens de contrôle 7 mis en oeuvre sur un système informatique 7, permettent de contrôler un certain nombre de dispositifs de gestion d'accès 1 à 5.

En particulier, ces moyens de contrôle 7 assurent la configuration et la supervision des dispositifs de gestion d'accès 1 à 5. Ils permettent également de gérer les utilisateurs du système, tels que les passagers dans le cas d'un réseau de transport

Ces moyens de contrôle 7 peuvent comprendre, ou être couplés à, une plateforme accessible à distance par les utilisateurs, via un réseau informatique, permettant de mettre en oeuvre des opérations de fidélisation des utilisateurs et l'achat à distance de titres d'autorisation d'accès, ou titres de transport dans le cas de l'accès à un réseau de transport.

Ces moyens de contrôle 7 peuvent aussi inclure un module de gestion des médias utilisés par les utilisateurs pour accéder au service, tels que des cartes sans contact hébergeant des informations sur les utilisateurs et des titres de transport.

Les dispositifs de gestion d'accès 1 à 5 sont destinés à délivrer une autorisation d'accès, tel qu'un titre de transport, ou à autoriser l'accès à partir de la lecture (avec ou sans contact) d'un titre de transport, ou à valider l'accès en vue d'un contrôle de validité de titre de transport ultérieur.

Certains dispositifs de gestion d'accès 1 à 5 peuvent assurer plusieurs des fonctions listées ci-dessus.

Dans l'exemple de la figure 1, les dispositifs 1 et 2 sont des dispositifs d'autorisation d'accès, respectivement de type portillon double et barrière simple.

Le dispositif 3 est un dispositif de validation de l'accès, qui sert notamment à lire et valider une autorisation d'accès telle qu'un titre de transport. Le dispositif 3 peut être combiné avec le dispositif 1 ou le dispositif 2. Il sert alors à valider le titre de transport et à ouvrir le double portillon du dispositif 1 ou la barrière du dispositif 2.

Ce dispositif 3 peut aussi être disposé à l'intérieur ou à l'extérieur de la zone de service, sans être associé à un dispositif 1, 2 de d'autorisation d'accès. Par exemple, dans le cas d'un système de contrôle d'accès à un réseau de transport en bus ou en métro, le dispositif 3 peut être placé à l'intérieur du bus ou du métro.

Le dispositif 4 est un dispositif permettant de délivrer une autorisation d'accès, tel qu'un distributeur automatique de titres de transport permettant à un utilisateur d'acheter un titre de transport.

Le dispositif 5 est un autre dispositif permettant de délivrer une autorisation d'accès, tel qu'un guichet permettant à un utilisateur d'acheter un titre de transport auprès d'un opérateur.

Ces dispositifs 1 à 5 sont reliés aux moyens de contrôle 7 aux fins de contrôle de leur fonctionnement tel qu'expliqué plus haut.

Les moyens de contrôle 7 sont associés à une base de données 6 permettant notamment de stocker et gérer des identifiants de dispositif (IDDᵢ), ainsi que d'autres informations utiles au contrôle et à la gestion du bon fonctionnement des dispositifs (information de localisation, type de dispositif de gestion d'accès, etc...).

La base de données permet également de stocker des informations destinées à être diffusées au sein du système de contrôle d'accès au service et/ou lieu, telles que des annonces publicitaires ou des annonces de service. Ces informations sont identifiées par des identifiants d'information (IDIⱼ) également stockés dans la base de données 6. D'autres caractéristiques attachées aux informations à diffuser peuvent également être stockées dans la base de données 6 (période de diffusion, tarif dans le cas d'une diffusion payante, début de validité, etc...).

A certains des dispositifs 1 à 5 de gestion d'accès, on associe un ou plusieurs moyens de diffusion d'information 18 à 27.

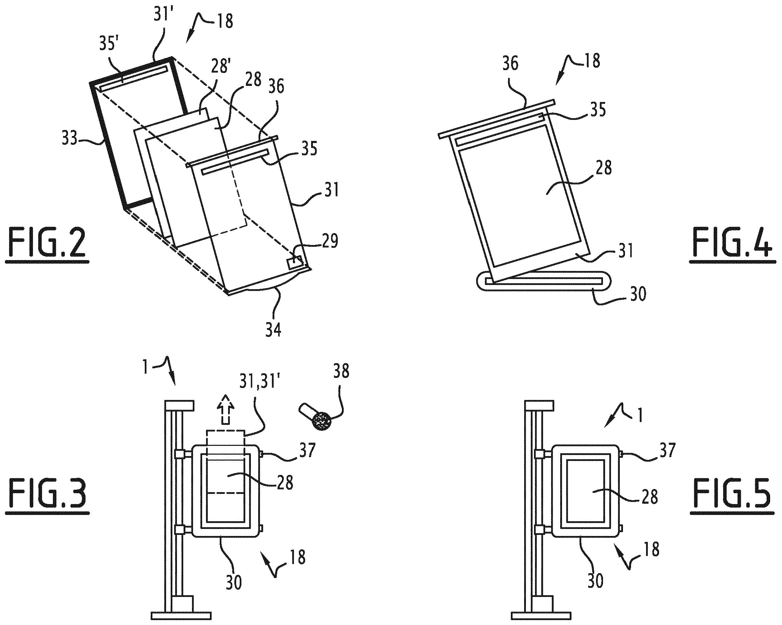

Ainsi, le dispositif 1 comprend deux moyens d'information 18 et 19, dont un exemple de réalisation sera détaillé plus loin en référence aux figures 2 à 5, au niveau des deux battants du portillon double.

Le dispositif 2 comprend un moyen 20 de diffusion d'information, sous la forme d'un panneau 20 suspendu sous la barre d'accès.

Le dispositif 3 comprend un moyen 21 de diffusion d'information, qui peut prendre la forme d'un panneau 21 séparé du dispositif 3 lui-même, ou qui peut être disposé par exemple sur l'une des parois latérales du dispositif 3 (non visibles sur la figure 1 dans la mesure ou le dispositif 3 est vu de face).

Le dispositif 4 comprend un moyen 22 de diffusion d'information, qui peut prendre ici encore la forme d'un panneau séparé du dispositif 4 lui-même, ou qui peut être disposé par exemple sur l'une des parois latérales du dispositif 4 (non visibles sur la figure 1 dans la mesure ou le dispositif 4 est vu de face), ou encore fixé latéralement sur ce dispositif 4.

Le dispositif 5 comprend plusieurs moyens 23 à 27 de diffusion d'information, qui prennent la forme de panneaux 23 à 27 répartis en différentes zones de la paroi frontale de ce dispositif 5 de type guichet de vente.

Les moyens de contrôle 7 permettent d'associer, ou de désassocier, une information à diffuser 8 à 17, avec un dispositif de gestion d'accès 1 à 5, en associant dans la base de données 6 tout ou partie des identifiants (IDⱼ) d'informations 8 à 17 à diffuser, à tout ou partie des identifiants (IDDᵢ) de dispositifs 1 à 5.

De la sorte, les moyens de contrôle non seulement réalisent le contrôle du fonctionnement des dispositifs 1 à 5, tel qu'expliqué plus haut, mais également permettent la gestion de la diffusion des informations 8 à 17 par les moyens de diffusion 18 à 27 associés aux dispositifs 1 à 5.

Ainsi, les informations 8 et 9 sont diffusées respectivement sur les moyens de diffusion 18, 19 associés au dispositif 1, sous contrôle des moyens de contrôle 7.

De même, les informations 10, 11 et 12 sont diffusées respectivement sur les moyens de diffusion 20, 21, 22 associés respectivement aux dispositifs 2, 3 et 4, sous contrôle des moyens de contrôle 7.

Enfin, les informations 13 à 17 sont diffusées respectivement sur les moyens de diffusion 23 à 27 associés au dispositif 1, sous contrôle des moyens de contrôle 7.

Une information 8 à 17 est donc associée à un et un seul dispositif 1 à 5, alors qu'un dispositif 1 à 5 est associé à une ou plusieurs informations 8 à 17.

Un utilisateur peut donc se procurer, par exemple auprès du dispositif automatique 4 ou du dispositif de type guichet 5, ou encore à distance, via un module d'autorisation accessible à distance par une connexion en réseau, une autorisation d'accès au service et/ou lieu éventuellement payante, délivrée sur un support physique ou virtuel, tel qu'une carte ou un ticket magnétique ou avec un code barre, une carte ou un ticket sans contact.

En outre, un utilisateur peut aussi se procurer, auprès du même dispositif automatique 4 ou dispositif de type guichet 5, ou via le même module d'autorisation accessible à distance, un support 29 d'identification d'information portant un marqueur 29 associé à l'identifiant IDIⱼ de l'information en question dans la base de données 6.

D'autres détails sur le marqueur 29 et son support 29 sont donnés plus loin en référence aux figures 2 à 5 concernant un exemple de moyen de diffusion de l'information et de dispositif de gestion d'accès.

Un utilisateur est donc soit un usager du service, tel qu'un passager d'un réseau de transport, soit un usager annonceur ou opérateur souhaitant diffuser une information 8 à 17 sur l'un des dispositifs 1 à 5 via l'un des moyens de diffusion 18 à 27, soit les deux à la fois.

Comme dans le cas du dispositif de gestion d'accès 3, un lecteur 32 de support d'autorisation d'accès, relié aux moyens de contrôle 7, permet de lire le support de marqueur 29, ce qui permet la gestion de la diffusion de l'information 11 correspondante par les moyens de contrôle 7.

En particulier, la lecture par le lecteur 32 du support de marqueur 29 permet d'identifier l'information à diffuser et de suivre sa diffusion.

La figure 2 représente schématiquement un exemple de moyen de diffusion d'information 18 tel que l'un de ceux qui sont associés au dispositif de gestion d'accès 1 dans le système de la figure 1.

Dans cet exemple, l'information 8 à diffuser est par exemple imprimée sur un support physique recto-verso 28, 28' inséré entre deux panneaux 31, 31' en matière transparente et pourvus d'un joint d'étanchéité 33.

On peut prévoir un moyen facilitant le retrait, tel qu'une lame de ressort 34, dont la fonction sera mieux comprise plus loin en référence aux figures 3 à 5.

Un système de verrouillage 35, 35', par exemple de type gâche de verrouillage 35 sur l'un des panneaux 31 blocable dans un logement 35' sur l'autre des panneaux 31'. D'autres moyens de verrouillage peuvent bien sûr être utilisés.

On peut également prévoir un élément de protection 36 permettant d'obturer la glissière dans laquelle sera inséré l'ensemble, comme on le verra plus loin en référence aux figures 3 à 5.

Dans cet exemple, le marqueur d'information et son support 29 peuvent être insérés dans le moyen de diffusion 18, et désinsérés de ce moyen de diffusion 18.

Comme mentionné plus haut, le moyen de diffusion 18 comprend une glissière 30 dans laquelle le support physique d'information 28, 28' est inséré après positionnement sur un panneau simple ou entre deux panneaux 31, 31' tel que représenté à la figure 2.

Cette glissière 30 est fixée de préférence sur le dispositif de gestion d'accès 1, ou placée à proximité de ce dispositif 1. Elle est visible sur les figures 3 à 5 qui représentent schématiquement le dispositif de gestion d'accès 1 du système de la figure 1, associé au moyen de diffusion d'information 18 avec respectivement une information diffusée sur son support physique 28 en cours de désinsertion, une information à diffuser sur son support physique 28 en cours d'insertion, et une information sur son support physique 28 inséré dans la glissière 30 et donc en cours de diffusion.

Les moyens de verrouillage 35, 35' mentionnés plus haut en référence à la figure 2 peuvent être actionnés au moyen d'un dispositif de type clé 38 plus verrou 37. Lorsque l'ensemble est maintenu verrouillé dans la glissière 30, les moyens 34 facilitant le retrait, tels que la lame de ressort 34 présentée plus haut en référence à la figure 2, sont comprimés. Lorsqu'on utilise le dispositif 37, 38 pour déverrouiller les moyens de verrouillage 35, 35', la lame de ressort 34 pousse l'ensemble en partie en dehors de la glissière 30, ce qui facilite le retrait.

Dans une autre variante, l'information à diffuser peut être diffusée de façon électronique, sans utilisation d'un support physique de diffusion.

Il peut s'agir par exemple d'une information visuelle ou sonore. Le moyen de diffusion correspondant comprend alors un moyen de diffusion électronique de l'information, tel qu'un écran, ou un haut-parleur.

L'information à diffuser, quelle que soit sa nature, sera disposée à proximité d'un dispositif de gestion d'accès et associée à ce dernier pour profiter du système de lecture tel que le lecteur 32 présenté plus haut qui permet l'identification de l'information dans le système et sa gestion par les moyens de contrôle 7.

Le système de l'invention permet notamment, via les moyens de contrôle 7, de générer des rapports, tels que la liste des utilisateurs disposant d'une information à diffuser sous la forme d'un support avec marqueur 29 identifiant ladite information, la liste des produits information vendus et leurs montants dans le cas de la diffusion payante d'information, la liste des informations en cours de diffusion, la liste des dispositifs de gestion d'accès, donc des emplacements, pour lesquels il y a eu le plus d'informations vendues pour diffusion sur une période donnée, dans un but d'ajustement des tarifs de vente.

On peut prévoir que l'association d'une information à diffuser avec un dispositif de gestion d'accès se face par période, par exemple une fois par jour, avec un processus permettant de lister les informations qui deviennent valides en début de cette période, et de générer ou mettre à jour une table d'association qui permet le suivi en temps réel des informations diffusées sur les moyens de diffusion associés à chaque dispositif de gestion d'accès.

Un autre processus permet également de lister les informations dont la validité a expiré, et donc de réaliser une dé-association, par exemple en fin de journée, en mettant à jour la table d'association.

Eventuellement, le système peut générer, par l'intermédiaire des moyens de contrôle 7, des alertes afin de signaler les informations expirées, et/ou procéder à la réconciliation des informations à diffuser vendues, ainsi que des emplacements (les dispositifs de gestion d'accès) visés, avec la diffusion effective de ces information au niveau de ces emplacements.

La présente description est donnée à titre d'exemple et n'est pas limitative de l'invention.

En particulier, la représentation de la figure 1 est purement schématique et vise à donner une vue fonctionnelle d'un exemple de système selon l'invention. Ainsi, la base de données 6 est représentée séparée du système informatique 7 sur lequel sont implémentés les moyens de contrôle 7, mais en pratique, cette base de données 6 peut elle-même être implémentée dans ce système informatique 7, ou bien dans un système séparé, distant ou proche, relié en réseau.

Egalement, la base de données 6 est représentée comme un unique moyen de stockage d'information monobloc, mais peut tout aussi bien être implémentée de façon répartie sur plusieurs moyens de stockage physiquement distincts, éventuellement distants, reliés en réseau.

Par ailleurs, le moyen de diffusion d'information 18 représenté aux figures 2 à 5 n'est qu'un exemple de moyens de diffusion physique d'une information. D'autres moyens, présentant une autre forme, et adaptés à l'association avec un dispositif de gestion d'accès 1 à 5 déterminé, peuvent être utilisés.

La présente description est donnée à titre d'exemple, et n'est pas limitative de l'invention.

En particulier, dans les exemples présentés non limitatifs, le dispositif déterminé de gestion d'accès est une porte d'accès 1, 2, ou un distributeur automatique 3 d'autorisations d'accès, ou un guichet de vente 4 d'autorisations d'accès, ou encore un dispositif de lecture et/ou validation 5 d'autorisations d'accès, notamment pour l'accès à un réseau de transport. Plus généralement le dispositif déterminé est associé un moyen de lecture capable de lire le média associé à l'information à diffuser pour permettre la gestion de la diffusion de l'information.

## Revendications

1. Système informatisé de contrôle d'accès à un service et/ou à un lieu, comprenant plusieurs dispositifs de gestion d'accès (1 à 5) aptes à délivrer une autorisation d'accès, ou à autoriser ou valider l'accès, audit service et/ou lieu par un utilisateur, chacun des dispositifs de gestion d'accès (1 à 5) étant identifié par un identifiant de dispositif (IDDᵢ), le système comprenant également une base de données (6) dans laquelle sont stockés les identifiants de dispositif (IDDᵢ), et des moyens de contrôle (7) des dispositifs de gestion d'accès (1 à 5) aptes à contrôler le fonctionnement des dispositifs de gestion d'accès (1 à 5),
la base de données (6) comprenant des informations (8 à 17) à diffuser identifiées chacune par un identifiant d'information (IDIⱼ) également stocké dans la base de données (6), au moins un dispositif déterminé (1 à 5) parmi les dispositifs de gestion d'accès (1 à 5) étant associé à au moins un moyen de diffusion d'information (18 à 27), et les moyens de contrôle (7) étant aptes à associer dans la base de données (6) l'identifiant (IDIⱼ) d'au moins une information déterminée (8 à 17) à diffuser à l'identifiant (IDDᵢ) du dispositif déterminé (1 à 5), en sorte de permettre la gestion de la diffusion, par le moyen de diffusion (18 à 27) associé au dispositif déterminé (1 à 5), de l'information déterminée (8 à 17),
l'un des dispositifs de gestion d'accès (1 à 5) et/ou un module d'autorisation accessible à distance via un réseau informatique étant aptes à délivrer des autorisations d'accès au service et/ou lieu sur un support tel qu'un ticket ou une carte de type magnétique ou sans contact, ledit dispositif de gestion d'accès (1 à 5) et/ou ledit module d'autorisation étant aptes à délivrer un marqueur (29) associé à l'identifiant (IDIⱼ) de l'information déterminée (8) sur un support (29) tel qu'un ticket ou une carte de type magnétique ou sans contact, le dispositif déterminé (1 à 5) comprenant un lecteur (32) de support d'autorisation d'accès relié aux moyens de contrôle (7), le lecteur (32) étant apte à lire le support de marqueur (29) en sorte de permettre la gestion de la diffusion de l'information (8 à 17), le moyen de diffusion (18) comprenant un support d'information physique (28, 28').

2. Système selon la revendication 1, **caractérisé en ce que** le moyen de diffusion (18) est apte à recevoir de façon temporaire le support de marqueur (29) associé à l'identifiant (IDIⱼ) de l'information déterminée (8).

3. Système selon la revendication 1 ou 2, **caractérisé en ce que** le moyen de diffusion (18) comprend au moins une glissière (30) fixée sur le, ou à proximité du, dispositif déterminé (1), et **en ce que** le support d'information physique (28) est placé sur ou dans un panneau (31, 31') inséré dans la glissière (30).

4. Système selon l'une quelconque des revendications 1 à 3, **caractérisé en ce que** le dispositif déterminé (1 à 5) est une porte d'accès (1, 2) ou un distributeur automatique (3) d'autorisations d'accès ou un guichet de vente (4) d'autorisations d'accès ou un dispositif de lecture et/ou validation (5) d'autorisations d'accès, notamment pour l'accès à un réseau de transport.

5. Procédé informatisé de contrôle d'accès à un service et/ou à un lieu, par la délivrance d'une autorisation d'accès, ou par autorisation ou validation de l'accès, audit service et/ou lieu par un utilisateur, par l'intermédiaire de plusieurs dispositifs de gestion d'accès (1 à 5) chacun identifié par un identifiant de dispositif (IDDᵢ) stocké dans une base de données (6) et chacun contrôlé par des moyens de contrôle (7),
la base de données (6) comprenant des informations (8 à 17) à diffuser identifiées chacune par un identifiant d'information (IDIⱼ) également stocké dans la base de données (6), au moins un dispositif déterminé (1 à 5) parmi les dispositifs de gestion d'accès (1 à 5) étant associé à au moins un moyen de diffusion d'information (18 à 27), et le procédé comprenant l'association et/ou la dé-association, dans la base de données (6), par les moyens de contrôle (7), de l'identifiant (IDIⱼ) d'au moins une information déterminée (8 à 17) à diffuser avec l'identifiant (IDDᵢ) du dispositif déterminé (1 à 5), en sorte de permettre la gestion de la diffusion, par le moyen de diffusion (18 à 27) associé au dispositif déterminé (1 à 5), de l'information déterminée (8 à 17),
des autorisation d'accès au service et/ou lieu étant délivrées par l'un des dispositifs de gestion d'accès (1 à 5) et/ou un module d'autorisation accessible à distance via un réseau informatique, sur un support tel qu'un ticket ou une carte de type magnétique ou sans contact, un marqueur (29) associé à l'identifiant (IDIⱼ) de l'information déterminée (8) étant délivré par ledit dispositif de gestion d'accès (1 à 5) et/ou ledit module d'autorisation, sur un support (29) tel qu'un ticket ou une carte de type magnétique ou sans contact, le dispositif déterminé (1 à 5) comprenant un lecteur (32) de support d'autorisation d'accès relié aux moyens de contrôle (7), le procédé comprenant la lecture par le lecteur (32) du support de marqueur (29) en sorte de permettre la gestion de la diffusion de l'information (8 à 17), le procédé comprenant la diffusion de l'information déterminée (8 à 17) sur un support d'information physique (28).

6. Procédé selon la revendication 5, **caractérisé en ce qu'**il comprend le positionnement du support de marqueur (29) de façon temporaire dans le moyen de diffusion (18).

7. Procédé selon la revendication 5 ou 6, **caractérisé en ce que** le support d'information physique (28) est placé sur ou dans un panneau (31) inséré dans au moins une glissière (30) fixée sur le, ou à proximité du, dispositif déterminé (1).

## Patentansprüche

1. Computergestütztes System zur Steuerung des Zugangs zu einer Dienstleistung und/oder einem Ort, das mehrere Vorrichtungen zum Verwalten des Zugangs (1 bis 5) umfasst, die geeignet sind, eine Autorisierung für den Zugang zu der Dienstleistung und/oder dem Ort durch einen Benutzer zu liefern oder den Zugang zu autorisieren oder zu validieren, wobei jede der Vorrichtungen (1 bis 5) zum Verwalten des Zugangs durch eine Vorrichtungskennung (IDDᵢ) identifiziert wird, wobei das System gleichfalls eine Datenbank (6), in der die Vorrichtungskennungen (IDDᵢ) gespeichert sind, und Mittel (7) zum Steuern der Vorrichtungen (1 bis 5) zum Verwalten des Zugangs umfasst, die geeignet sind, die Funktionsweise der Vorrichtungen (1 bis 5) zum Verwalten des Zugangs zu steuern,
wobei die Datenbank (6) Informationen (8 bis 17) zum Verbreiten umfasst, die jeweils durch eine Informationskennung (IDIⱼ) identifiziert sind, die gleichfalls in der Datenbank (6) gespeichert ist, wobei mindestens eine bestimmte Vorrichtung (1 bis 5) unter den Vorrichtungen (1 bis 5) zum Verwalten des Zugangs mindestens einem Mittel (18 bis 27) zum Verbreiten von Informationen zugeordnet ist und die Mittel (7) zum Steuern geeignet sind, in der Datenbank (6) die Kennung (IDIⱼ) mindestens einer bestimmten zu verbreitenden Information (8 bis 17) der Kennung (IDDᵢ) der bestimmten Vorrichtung (1 bis 5) zuzuordnen, um die Verwaltung der Verbreitung der bestimmten Information (8 bis 17) durch das der vorbestimmten Vorrichtung (1 bis 5) zugeordnete Verbreitungsmittel (18 bis 27) zu gestatten,
wobei eine der Vorrichtungen (1 bis 5) zum Verwalten des Zugangs und/oder ein über ein Datennetz aus der Entfernung zugängliches Autorisierungsmodul geeignet sind, Autorisierungen für den Zugang zur Dienstleistung und/oder zum Ort auf einem Träger, wie einem Ticket oder einer Magnetkarte oder einer kontaktlosen Karte, zu liefern, wobei die Vorrichtung (1 bis 5) zum Verwalten des Zugangs und/oder das Autorisierungsmodul geeignet sind, eine Markierung (29), die der Kennung (IDIⱼ) der bestimmten Information (8) zugeordnet ist, auf einem Träger (29), wie einem Ticket oder einer Magnetkarte oder einer kontaktlosen Karte, zu liefern, wobei die bestimmte Vorrichtung (1 bis 5) einen Leser (32) des Trägers der Autorisierung des Zugangs umfasst, der an die Steuermittel (7) angeschlossen ist, wobei der Leser (32) geeignet ist, den Markierungsträger (29) zu lesen, um die Verwaltung der Verbreitung der Information (8 bis 17) zu gestatten, wobei das Mittel (18) zum Verbreiten einen physischen Informationsträger (28, 28') umfasst.

2. System nach Anspruch 1, **dadurch gekennzeichnet, dass** das Mittel (18) zum Verbreiten geeignet ist, zeitweise den Markierungsträger (29) aufzunehmen, der der Kennung (IDIⱼ) der bestimmten Information (8) zugeordnet ist.

3. System nach Anspruch 1 oder 2, **dadurch gekennzeichnet, dass** das Mittel (18) zum Verbreiten mindestens eine Gleitschiene (30) umfasst, die an der oder in der Nähe der bestimmten Vorrichtung (1) angebracht ist, und dass der physische Informationsträger (28) auf oder in einem Paneel (31, 31') positioniert ist, das in die Gleitschiene (30) eingeführt ist.

4. System nach einem beliebigen der Ansprüche 1 bis 3, **dadurch gekennzeichnet, dass** die bestimmte Vorrichtung (1 bis 5) eine Zugangstür (1, 2) oder eine automatische Ausgabevorrichtung (3) für Zugangsautorisierungen oder ein Schalter (4) zum Verkauf von Zugangsautorisierungen oder eine Vorrichtung (5) zum Lesen und/oder Validieren von Zugangsautorisierungen, insbesondere für den Zugang zu einem Transportnetz, ist.

5. Computergestütztes Verfahren zur Steuerung des Zugangs zu einer Dienstleistung und/oder zu einem Ort durch Lieferung einer Zugangsautorisierung oder durch Autorisierung oder Validierung des Zugangs zu der Dienstleistung und/oder dem Ort durch einen Benutzer mittels mehrerer Vorrichtungen (1 bis 5) zum Verwalten des Zugangs, die jeweils durch eine Vorrichtungskennung (IDDᵢ) identifiziert werden, die in einer Datenbank (6) gespeichert ist, und wobei die Vorrichtungen jeweils durch Steuermittel (7) gesteuert sind,
wobei die Datenbank (6) Informationen (8 bis 17) zum Verbreiten umfasst, die jeweils durch eine Informationskennung (IDIⱼ) identifiziert sind, die gleichfalls in der Datenbank (6) gespeichert ist, wobei mindestens eine bestimmte Vorrichtung (1 bis 5) unter den Vorrichtungen (1 bis 5) zum Verwalten des Zugangs mindestens einem Mittel (18 bis 27) zum Verbreiten von Informationen zugeordnet ist und das Verfahren in der Datenbank (6) die Zuordnung oder die Aufhebung der Zuordnung der Kennung (IDIⱼ) mindestens einer bestimmten zu verbreitenden Information (8 bis 17) mit der Kennung (IDDᵢ) der bestimmten Vorrichtung (1 bis 5) durch die Mittel (7) zum Steuern umfasst, um die Verwaltung der Verbreitung der bestimmten Information (8 bis 17) durch das der vorbestimmten Vorrichtung (1 bis 5) zugeordnete Verbreitungsmittel (18 bis 27) zu gestatten,
wobei Zugangsautorisierungen zur Dienstleistung und/oder zum Ort durch eine der Vorrichtungen (1 bis 5) zum Verwalten des Zugangs und/oder durch ein über ein Datennetz aus der Entfernung zugängliches Autorisierungsmodul auf einem Träger, wie einem Ticket oder einer Magnetkarte oder einer kontaktlosen Karte, geliefert werden, wobei eine Markierung (29), die der Kennung (IDIⱼ) der bestimmten Information (8) zugeordnet ist, durch die Vorrichtung (1 bis 5) zum Verwalten des Zugangs und/oder das Autorisierungsmodul auf einem Träger (29), wie einem Ticket oder einer Magnetkarte oder einer kontaktlosen Karte, geliefert wird, wobei die bestimmte Vorrichtung (1 bis 5) einen Leser (32) des Trägers der Autorisierung des Zugangs umfasst, der an die Steuermittel (7) angeschlossen ist, wobei das Verfahren das Lesen des Markierungsträger (29) durch den Leser (32) umfasst, um die Verwaltung der Verbreitung der Information (8 bis 17) zu gestatten, wobei das Verfahren das Verbreiten der bestimmten Information auf einem physischen Informationsträger (28, 28') umfasst.

6. Verfahren nach Anspruch 5, **dadurch gekennzeichnet, dass** es die zeitweise Positionierung des Markierungsträgers (29) in dem Mittel (18) zum Verbreiten umfasst.

7. Verfahren nach Anspruch 5 oder 6, **dadurch gekennzeichnet, dass** der physische Informationsträger (28) auf oder in einem Paneel (31) positioniert wird, das in mindestens eine Gleitschiene (30) eingeführt wird, die an oder in der Nähe der bestimmten Vorrichtung (1) angebracht ist.

## Claims

1. A computerized system for controlling access to a service and/or to a place, comprising several access handling devices (1 to 5) able to issue an access authorization, or to authorize or validate the access to said service and/or place by a user, each of the access handling devices (1 to 5) being identified by a device identifier (IDDᵢ), the system also comprising a database (6) wherein are stored the device identifiers (IDDᵢ), and means (7) for controlling the access handling devices (1 to 5) able to control the operation of the access handling devices (1 to 5),
the database (6) comprising pieces of information (8 to 17) to be broadcast each identified by an information identifier (IDIⱼ) also stored in the database (6), at least one determined device (1 to 5) from among the access handling devices (1 to 5) being associated with at least one information broadcasting means (18 to 27), and the control means (7) being able to associate in the database (6) the identifier (IDIⱼ) of at least one determined piece of information (8 to 17) to be broadcast with the identifier (IDDᵢ) of the determined device (1 to 5), so as to allow handling of the broadcasting, with the broadcasting means (18 to 27) associated with the determined device (1 to 5), for the determined piece of information (8 to 17),
one of the access handling devices (1 to 5) and/or an authorization module remotely accessible via a computer network, are able to issue access authorizations to the service and/or place on a medium such as a ticket or a card of the magnetic or contactless type, said access handling device (1 to 5) and/or said authorization module being able to issue a marker (29) associated with the identifier (IDIⱼ) of the determined piece of information (8) on a medium (29) such as a ticket or a card of the magnetic or contactless type, the determined device (1 to 5) comprising a reader (32) of an access authorization medium connected to the control means (7), the reader (32) being able to read the marker medium (29) so as to allow handling of the broadcasting of the piece of information (8 to 17), the broadcasting means (18) comprising a physical information medium (28, 28').

2. The system according to claim 1, **characterized in that** the broadcasting means (18) is able to temporarily receive the marker medium (29) associated with the identifier (IDIⱼ) of the determined piece of information (8).

3. The system according to claim 1 or 2, **characterized in that** the broadcasting means (18) comprises at least one slider (30) attached on the, or in proximity to the, determined device (1), and **in that** the physical information medium (28) is placed on or in a panel (31, 31') inserted into the slider (30).

4. The system according to any one of claims 1 to 3, **characterized in that** the determined device (1 to 5) is an access gate (1, 2) or an automatic dispenser (3) of access authorizations or a counter (4) for selling access authorizations or a device for reading and/or validating (5) access authorizations, notably for accessing a transport network.

5. A computerized method for controlling access to a service and/or to a place, by issuing an access authorization, or by authorizing or validating the access, to said service and/or place by a user, via several access handling devices (1 to 5) each identified by a device identifier (IDDᵢ) stored in a database (6) and each controlled by control means (7),
the database (6) comprising pieces of information (8 to 17) to be broadcast each identified by an information identifier (IDIⱼ) also stored in the database (6), at least one determined device (1 to 5) from among the access handling devices (1 to 5) being associated with at least one information broadcasting means (18 to 27), and the method comprising the association and/or the disassociation, in the database (6), by the control means (7), of the identifier (IDIⱼ) of at least one determined piece of information (8 to 17) to be broadcast with the identifier (IDDᵢ) of the determined device (1 to 5), so as to allow handling of the broadcasting, by the broadcasting means (18 to 27) associated with the determined device (1 to 5), of the determined piece of information (8 to 17),
access authorizations to the service and/or place being issued by one of the access handling devices (1 to 5) and/or an authorization module remotely accessible via a computer network, on a medium such as a ticket or card of the magnetic or contactless type, a marker (29) associated with the identifier (IDIⱼ) of the determined piece of information (8) being issued by said access handling device (1 to 5) and/or said authorization module, on a medium (29) such as a ticket or a card of the magnetic or contactless type, the determined device (1 to 5) comprising a reader (32) for the access authorization medium connected to the control means (7), the method comprising the reading by the reader (32) of the marker medium (29) so as to allow handling of the broadcasting of the piece of information (8 to 17), the method comprising the broadcasting of the determined piece of information (8 to 17) on a physical information medium (28)

6. The method according to claim 5, **characterized in that** it comprises the positioning of the marker medium (29) temporarily in the broadcasting means (18).

7. The method according to claim 5 to 6, **characterized in that** the physical information medium (28) is placed on or in a panel (31) inserted into at least one slider (30) attached on the, or in proximity to the, determined device (1).
